# EUROPÄISCHE PATENTSCHRIFT

(11) **EP 2 394 133 B1**
(45) Veröffentlichungstag und Bekanntmachung des Hinweises auf die Patenterteilung: **04.09.2013**
(21) Anmeldenummer: 10704506.4
(22) Anmeldetag: 08.02.2010
(51) Int. Cl.: G01B 3/06, F21L 4/02, F23Q 13/00

(54) **ZOLLSTOCK MIT LEUCHTELEMENT**
FOLDING RULE HAVING A LIGHTING ELEMENT
MÈTRE PLIANT AVEC ÉLÉMENT LUMINEUX

(30) Priorität: 09.02.2009 DE 202009001592 U; 16.04.2009 DE 102009017655
(43) Veröffentlichungstag der Anmeldung: 14.12.2011
(73) Patentinhaber: Fidan, Cetin, 96120 Bischberg (DE); Ciftci, Okan, 96135 Stegaurach (DE)
(72) Erfinder: Fidan, Cetin, 96120 Bischberg (DE); Ciftci, Okan, 96135 Stegaurach (DE)
(74) Vertreter: Eisenführ, Speiser & Partner
(86) Internationale Anmeldenummer: PCT/EP2010/000771
(87) Internationale Veröffentlichungsnummer: WO 2010/089148

(56) Entgegenhaltungen:
- DE-U1- 20 216 868
- DE-U1-202006 015 653
- US-A- 5 580 239

## Beschreibung

Die Erfindung betrifft einen Zollstock zum Ablesen von Entfernungen.

Zollstöcke sind auch als Meterstäbe oder Maßstäbe bekannt und werden unter anderem im Bauwesen eingesetzt, um Abstände von Bauteilen zu ermitteln oder Entfernungen auf Flächen zu markieren.

Bekannte Zollstöcke weisen den Nachteil auf, dass sie nicht In der Dämmerung, bei Nacht oder In einem dunklen Bereich verwendet werden können.

Aus der DE 20 2007 006 460 U1 ist ein Messgerät bekannt, das auch in der Dämmerung, bei Nacht oder In einem dunklen Bereich verwendet werden kann. Insbesondere ist aus der genannten Druckschrift ein Maßband bekannt, das in einem Gehäuse aufgenommen ist. In dem Gehäuse ist eine Beleuchtung eingebaut, die das Maßband seitlich anstrahlt und so den Einsatz des Maßbandes auch in der Dämmerung oder bei Nacht ermöglicht.

Aus DE 20 2006 015 653 U1 ist ein Maßstock zum Ablesen von Entfernungen bekannt, auf welchem in gleichmäßigen Intervallen optische Signalgeber angebracht sind, mit welchen Markierungen auf dem Maßstock in gewünschten Positionen ausgegeben werden können. Diese Markierungen können dann auf eine Fläche aufgetragen werden.

Aus DE 202 16 868 U1 ist eine Lampe, insbesondere eine Taschenlampe, mit Leuchtkopf und langgestrecktem Aufnahmekörper für die elektrische Versorgung bekannt, wobei am Aufnahmekörper eine Skaleneinteilung zur Längenmessung vorgesehen ist.

Aus US 5,580,239 A ist ein Feuerzeug bekannt, an dessen langgestrecktem Gehäuse eine Skaleneinteilung zur Längenmessung vorgesehen ist.

Maßbänder weisen jedoch den Nachteil auf, dass diese beim Messen des Abstandes zwischen zwei Bauteilen gegebenenfalls durchbiegen oder . "abknicken", was das Messergebnis verfälscht.

Die Aufgabe der Erfindung besteht darin, einen Zollstock bereit zu stellen, der es erlaubt, Messungen auch bei ungünstigen Beleuchtungsbedingungen vorzunehmen.

Zu diesem Zweck sieht die Erfindung einen Zollstock zum Ablesen von Entfernungen mit den *M*erkmalen der Patentanspruches 1 vor. Dieser Zollstock erlaubt es, Messungen auch bei ungünstigen Beleuchtungsbedlngungen, also in der Dämmerung, bei Nacht oder in einem dunklen Bereich, durchzuführen. Vorteilhaft an dem Zollstock ist, dass dieser stabiler und starrer als das aus dem Stand der Technik bekannte Maßband ist. Somit sind exakte Messungen möglich. Der erfindungsgemäße Zollstock hat also zwei Funktionen, nämlich das Beleuchten zumindest der näheren Umgebung und das Messen von Entfernungen.

Das mindestens eine Leuchtelement ist in den Zollstock integriert, d.h. das Leuchtelement ist Teil des Zollstocks, wobei vorzugsweise Leuchtschienen als seitliche Begrenzung des Endgliedes durchgängig an einer oder beiden Seiten des Gliedes angebracht oder integriert sein können. Auch können Leuchtelemente mit Leuchtrichtung parallel zum Zollstock am Endglied des Zollstockes so angebracht sein, dass die Leuchtelemente die Beschriftung des Zollstocks vollständig ausblenden.

Das mindestens eine Leuchtelement kann batterie- oder solarbetrieben sein. Dabei können die Batterien aufladbar sein, wobei es denkbar ist, dass der gesamte Zollstock in eine Ladestation gesteckt wird. Ein solarbetriebanes Leuchtelement ist vorteilhaft, da es keine Batterien benötigt. Solche Solarzellen sind z.B. bei solarbetrlebenen Taschenrechnem bekannt und benötigen wenig Bauraum. Ferner ist es denkbar, dass die Abmessungen des Endgliedes des Zollstocks so ausgeblidet ist, dass dieser eine Batterie, insbesondere eine Batterie der Größe AAA, aufnehmen kann.

Eine Schaltervorrichtung ist vorgesehen, mittels der das mindestens eine Leuchtelement ein- und/oder ausschaltbar ist. So kann das Leuchtelement mittels der Schaltervorrichtung auf Bedarf ein- oder ausgeschaltet werden.

Gemäß einer Ausführungsform kann die Schaltvorrichtung ein Schiebeschalter, ein Tastschalter, ein elektrisch gesteuerter Schalter oder ein Druckschalter sein.

Der Schalter bzw. die gewählte Schaltvorrichtung kann eine Stellung einnehmen, die ein Blinken des Leuchtelementes bewirkt. Der Zollstock ist deshalb auch als Wamelement verwendbar. Der blinkend Zollstock kann beispielsweise an ein vorstehendes Bauteil befestigt werden, um andere vor dem Hindernis zu warnen.

Auch kann die Schaltvorrichtung eine Stellung einnehmen, die ein oder mehrere Leuchtelemente ein- oder ausschaltet oder die Leuchtelemente dimmt. Ferner kann eine Stufenschaltung vorgesehen sein.

Es kann ein Magnetschalter vorgesehen sein und der Zollstock kann so ausgebildet sein, dass das mindestens eine Leuchtelement beim Aufklappen an- bzw. ausgeschaltet wird.

Der Zollstock ist ein Gilederzollstock mit mehreren Gliedern. Die einzelnen Glieder sind beispielsweise mitelnander vernietet, so dass der Zollstock zusammenfaltbar ist.

Auch können die Glieder oder einzelne Glieder mittels Verbindungselemente lösbar miteinander verbunden sein, weshalb einzelne Glieder ausgetauscht werden können. Zur lösbaren Verbindung können Druckknöpfe oder Schrauben verwendet werden.

Gemäß einer Ausführungsform können mehrere Leuchtelemente gleichmäßig über das Glied verteilt angeordnet sein. Genauso gut können die Leuchtelemente ungleichmäßig über das Glied verteilt angeordnet sein.

Das mindestens eine Leuchtelement ist vorzugsweise in das Material eines Gliedes teilweise oder ganz eingebettet

Das Material des Gliedes kann zumindest an der Stelle des mindestens einen Leuchtelementes oder vollständig für das vom wenigstens einen Leuchtelement ausgestrahlte Licht durchlässig sein.

Solche Leuchtelemente können auch eine Rückseite eines in dem obersten Glied des Gliederzollstockes transparent hinterlegten Firmenlogos beleuchten.

Der Zollstock kann eine Länge von 0,5m, 1 m, 2m, 3m, 4m, 5m usw. aufweisen.

Ein Glied des Zollstocks kann magnetisch sein, damit man es an einer benötigten Stelle anheften und in jeder gewünschten Position drehen kann. Der Zollstock ist dann um 360° drehbar.

Eine digitale Uhr mit Alarm- und/oder Erinnerungsfunktion kann eingesetzt sein.

Weitere Merkmale und Vorteile der Erfindung ergeben sich aus der nachfolgenden Beschreibung und den Zeichnungen. Die Erfindung wird anhand verschiedener Ausführungsformen beschrieben. In den Zeichnungen zeigen:

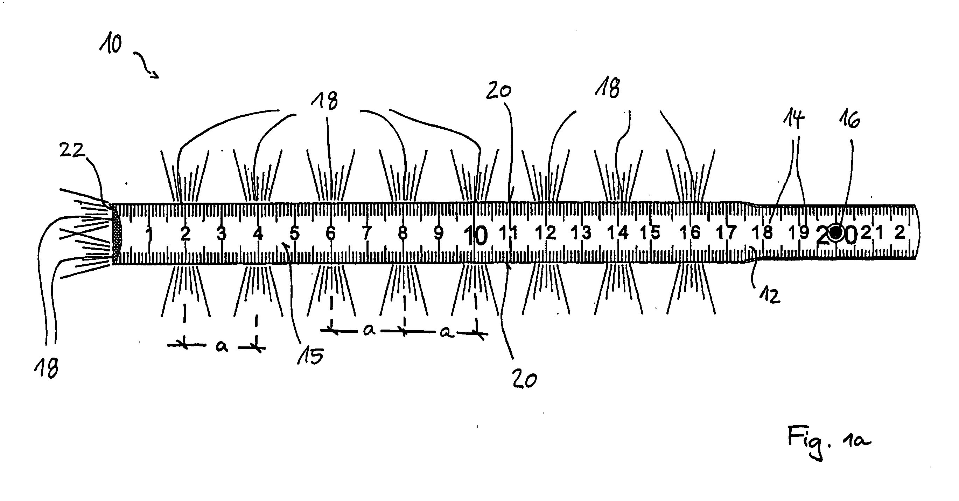

Figur 1a eine Draufsicht auf einen erfindungsgemäßen Zollstock gemäß einer ersten Ausführungsform mit Leuchtelementen im eingeschalteten Zustand,
Figur 1 b eine Seitenansicht des in Figur 1a gezeigten Zollstocks,
Figur 2 eine Frontansicht des in Figur 1 gezeigten Zollstocks mit ausgeschalteten Leuchtelementen,
Figur 3 eine Figur 2 entsprechende Frontansicht mit eingeschalteten Leuchtelementen,
Figur 4 eine Draufsicht auf einen erfindungsgemäßen Zollstock gemäß einer zweiten Ausführungsform mit seitlich angebrachten Leuchtelementen im eingeschalteten Zustand,
Figur 5 eine Figur 4 entsprechende Ansicht eines erfindungsgemäßen Zollstocks gemäß einer weiteren Ausführungsform mit seitlich angebrachten Leuchtelementen im eingeschalteten Zustand,
Figur 6 eine Figur 4 entsprechende Ansicht eines erfindungsgemäßen Zollstocks gemäß einer weiteren Ausführungsform mit Leuchtelementen im eingeschalteten Zustand,
Figur 7 eine Seitenansicht eines erfindungsgemäßen Zollstocks gemäß einer weiteren Ausführungsform mit einem eingeschalteten Leuchtelement,
Figur 8 eine Ansicht eines Elektronikbauteils mit einem Leuchtelement,
Figur 9 eine Figur 1a entsprechende Ansicht eines Zollstocks gemäß einer weiteren Ausführungsform mit ausgeschalteten Leuchtelementen,
Figur 10 eine Ansicht eines Elektronikbauteils mit einem Leuchtelement,
Figur 11 eine Seitenansicht des Zollstocks mit einer Aussparung, und
Figur 12 eine Seitenansicht eines erfindungsgemäßen Zollstocks gemäß einer weiteren Ausführungsform.

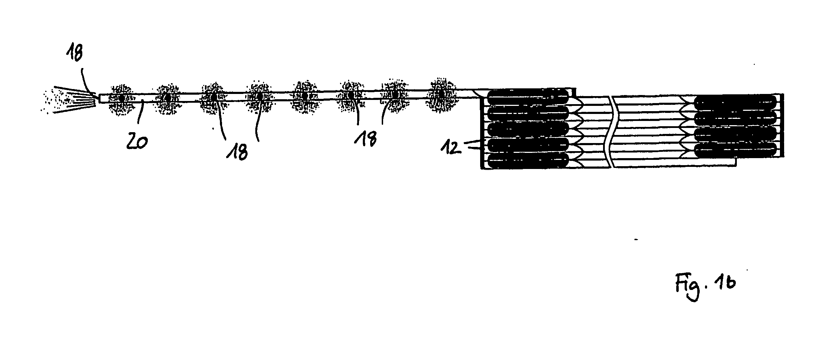

In den Figuren 1 bis 3 ist ein Zollstock 10 gemäß einer ersten Ausführungsform gezeigt. Der Zollstock 10 dient dem Ablesen von Entfernungen und ist auch als Meterstab oder Maßstab bekannt. Der Zollstock 10 ist ein Gliederzollstock mit mehreren Gliedern 12, die miteinander verbunden sind. in der Seitenansicht (Figuren 1b, 2 und 3) sind zehn Glieder 12 gezeigt. Es können auch mehr oder weniger als zehn Glieder vorgesehen sein. Jedes Glied hat eine Maßskala 14, so dass mit dem Zollstock 10 die Länge eines Bauteils oder der Abstand zwischen zwei Bauteilen von der Maßskala 14 abgelesen werden kann. Figur 1 zeigt die Maßskala 14 auf der Oberseite 15 des Gliedes 12.

Figur 1 zeigt ein Niet 16, mit dem die Glieder 12 miteinander verbunden sind. Genauso gut könnten die Glieder 12 mittels Druckknöpfe oder Schrauben lösbar miteinander verbunden sein (nicht gezeigt). Dies erlaubt es, einzelne Glieder auszutauschen.

Das bezüglich Figur 1a oberste Glied 12 weist mehrere Leuchtelemente 18 auf, die es erlauben, Messungen auch bei ungünstigen Beleuchtungsbedingungen, also bei Nacht, in der Dämmerung oder in einem dunklen Bereich, vorzunehmen. Es sind mehrere Leuchtelemente 18 (gezeigt sind jeweils acht) an den beiden längeren Seiten 20 (Längsseiten) des obersten Gliedes 12 und zwei Leuchtelemente 18 an einer Stirnseite 22 des obersten Gliedes 12 vorgesehen.

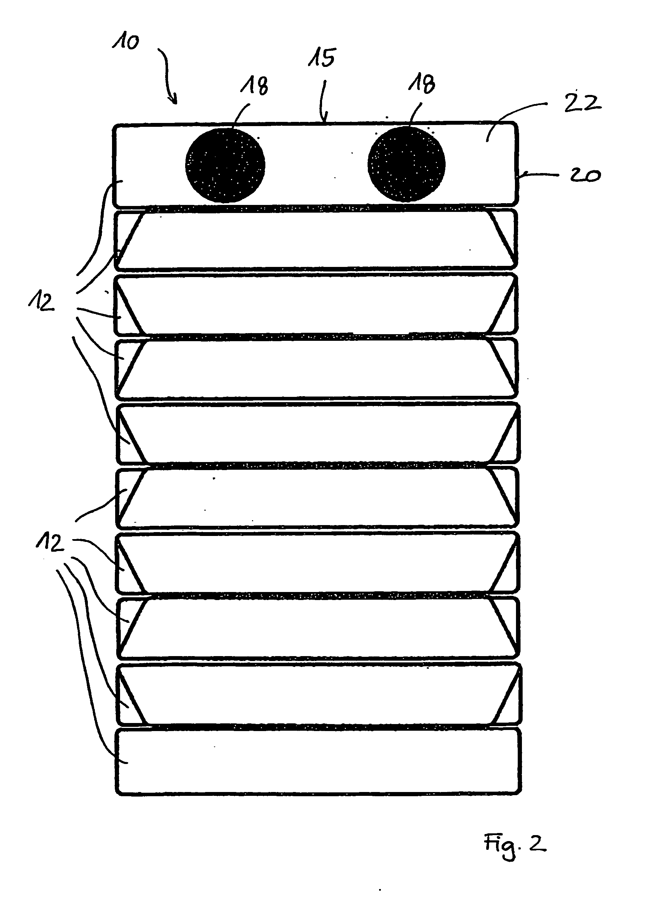

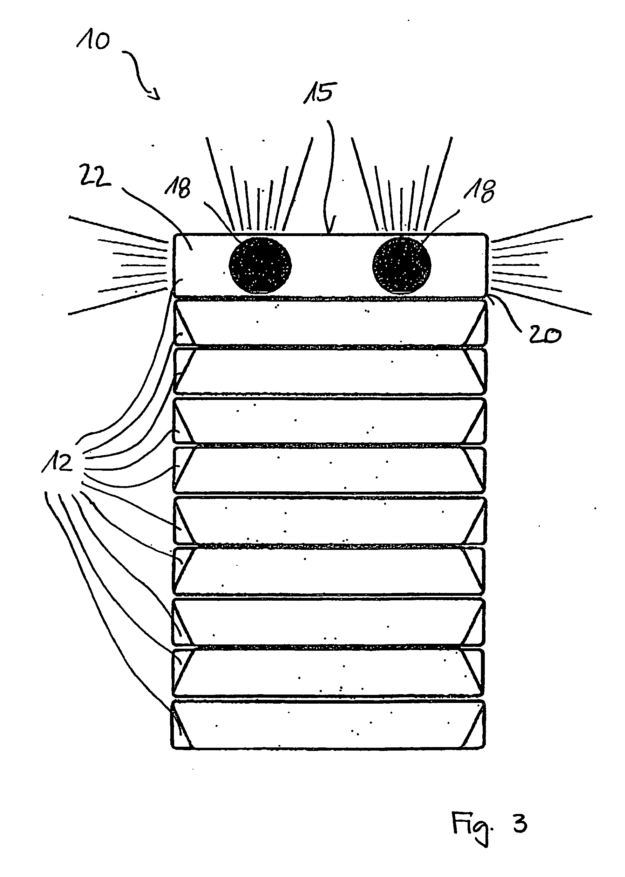

Die einzelnen Leuchtelemente 18 an den Längsseiten 20 des Gliedes 12 sind jeweils mit einem Abstand a voneinander entfernt angeordnet, d.h. die Leuchtelemente 18 sind gleichmäßig verteilt angeordnet Genauso gut könnten die Leuchtelemente ungleichmäßig verteilt angeordnet sein (nicht gezeigt). Figur 2 zeigt die Leuchtelemente 18 im ausgeschalteten Zustand, wohingegen die Figuren 1 und 3 dieselben im eingeschalteten Zustand zeigen.

Die Leuchtelemente 18 sind in das Glied 12 des Meterstabes 10 integriert, d.h. in vorgesehene Aussparungen (nicht gezeigt) eingesetzt. Die Leuchtelemente 18 sind an dem obersten Glied 12 angebracht. Auch können die Leuchtelemente in das Material des Gliedes 12 eingebettet sein. Das Material des Gliedes 12 kann dann zumindest an der Stelle des Leuchtelementes 18 oder auch vollständig für das vom wenigstes einen Leuchtelement 18 ausgestrahlte Licht durchlässig sein. Die Leuchtelemente 18 haben eine niedrige Bauweise und sind bündig eingebettet, so dass der Zollstock 10 in seiner Funktionalität nicht beschränkt wird (Einklappen, Messen usw.).

Die Leuchtelemente 18 können batterie- oder solarbetrieben sein, wobei als Batterie eine Knopfzelle verwendet werden kann. Auch können aufladbare Batterien verwendet werden. Weiterhin können die Leuchtelemente 18 mittels einer (nicht gezeigten) Schaltvorrichtung ein- und ausgeschaltet werden. Außerdem ist es möglich, dass die Leuchtelemente 18 blinken, wenn die (nicht gezeigte) Schaltvorrichtung, die beispielsweise ein Schiebeschalter, ein Tastschalter, ein elektrisch gesteuerter Schalter oder ein Druckschalter ist, eine "Blinkstellung" einnimmt. Falls ein Schiebeschalter verwendet wird, können in einer weiteren Stellung des Schalters nur die an der bezüglich Figur 1 oberen Längsseite 20 des Meterstabs 10 angeordneten Leuchtelemente 18 eingeschaltet werden, in einer weiteren Stellung nur die an der bezüglich Figur 1 unteren Längsseite 20 des Meterstabs 10 angeordneten Leuchtelemente 18, in einer weiteren Stellung nur die an der Stirnseite 22 angeordneten Leuchtelemente 18 und in einer weiteren Stellung alle Leuchtelemente 18 gleichzeitig eingeschaltet werden. Die Leuchtelemente 18 sind z. B. Leuchtdioden, wobei weiße oder anders farbige Leuchtdioden verwendet werden können.

Genauso gut könnten weitere Leuchtelemente an der Unterseite des bezüglich Figur 2 untersten Glieds 12 vorgesehen sein, die den Bereich unterhalb des Zollstocks 10 ausleuchten können.

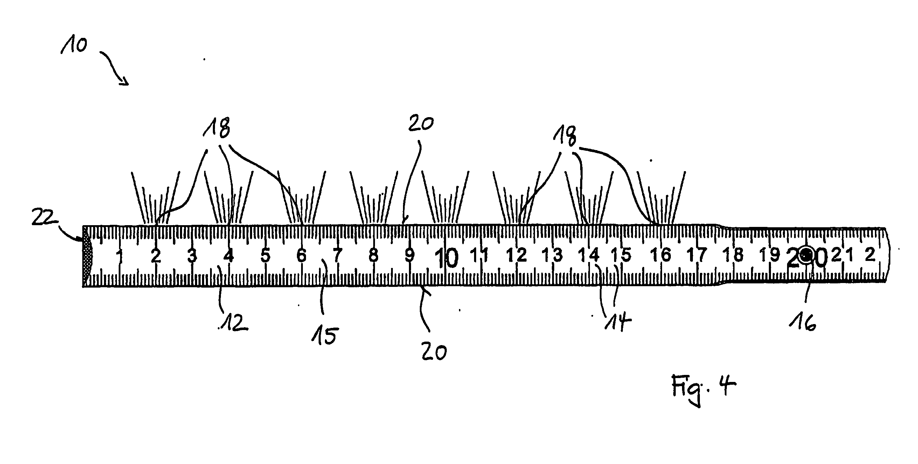

Die in Figur 4 gezeigte Ausführungsform unterscheidet sich von der ersten Ausführungsform nur darin, dass die Leuchtelemente 18 nur entlang einer der Längsseiten 20 vorgesehen sind, nämlich entlang der gemäß Figur 4 oberen Längsseite 20.

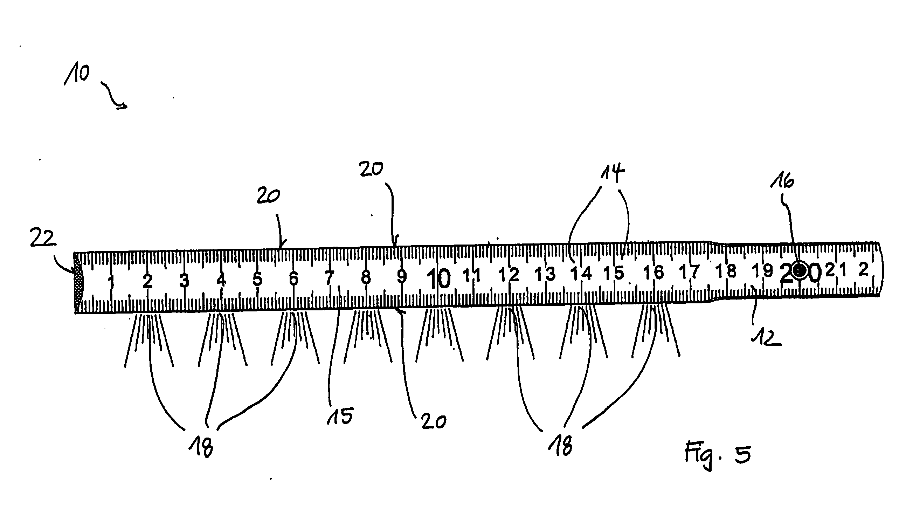

Die in Figur 5 gezeigte Ausführungsform unterscheidet sich von der in Figur 4 gezeigten Ausführungsform nur darin, dass die Leuchtelemente 18 nur entlang der gemäß Figur 5 unteren Längsseite 20 angeordnet sind.

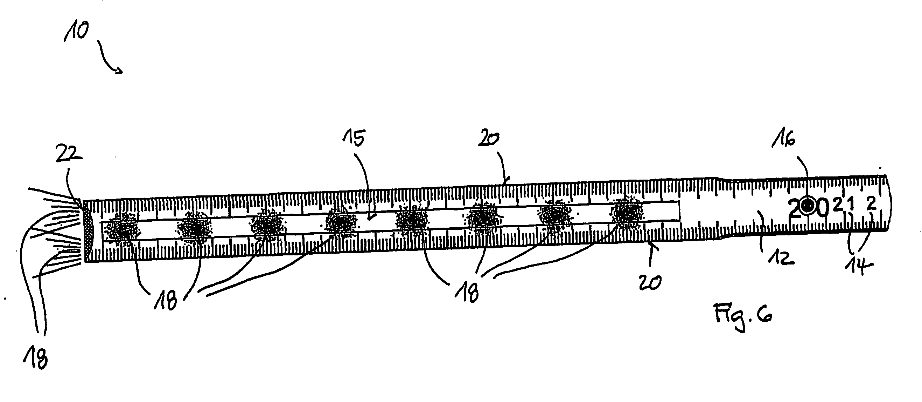

Die in Figur 6 gezeigte Ausführungsform unterscheidet sich von der in Figur 1 gezeigten Ausführungsform nur darin, dass die Leuchtelemente 18 an der Stirnseite 22, d.h. Querseite, und der Oberseite 15 des obersten Gliedes 12 angeordnet sind.

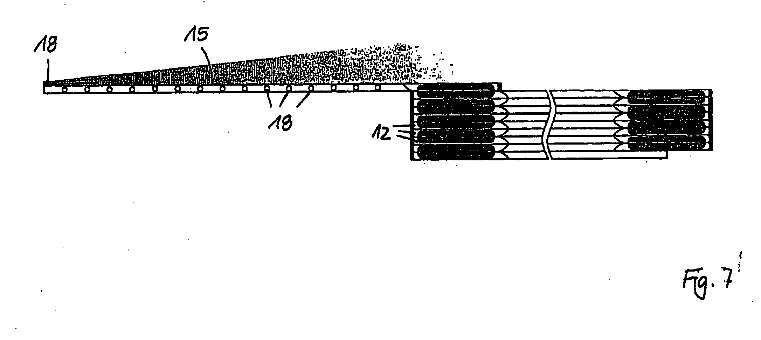

Die in Figur 7 gezeigte Ausführungsform unterscheidet sich von der in den Figuren 1 bis 3 gezeigten Ausführungsform darin, dass ein Leuchtelement 18 an der Oberseite 15 des Zollstocks 10 angeordnet ist und zwar so, dass es die auf der Oberseite 15 angebrachte Maßskala 14 ausleuchtet.

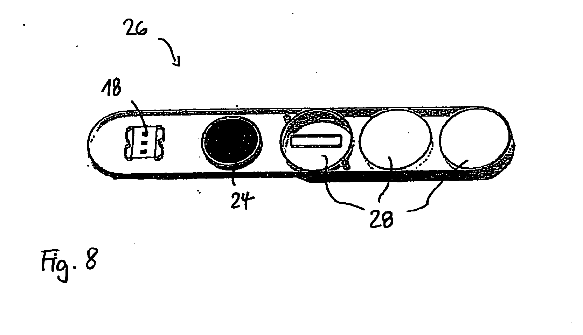

In Figur 8 ist ein Elektronikbauteil 26 mit einem Leuchtelement 18, einer Schaltereinrichtung 24 und drei Batterien 28 gezeigt, die auswechselbar sind. Das gezeigte Elektronikbauteil 26 ist in eine Aussparung im Zollstock 10 einsetzbar, d.h. das Elektronikbauteil 26 kann separat vom Zollstock 10 hergestellt werden. Das Elektronikbauteil 26 kann somit auch bei einem Zollstock 10 nachgerüstet werden.

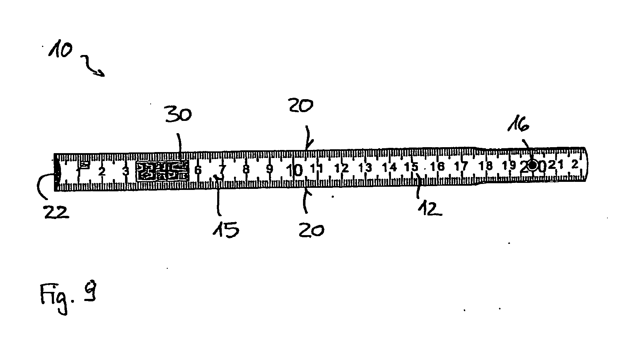

In Figur 9 ist der Zollstock 10 in einer weiteren Ausführungsform gezeigt. Diese unterscheidet sich von den bereits beschriebenen Ausführungsformen darin, dass eine Uhr 30 vorgesehen ist. Die Uhr 30 kann eine Alarm- und/oder Erinnerungsfunktion aufweisen. Die Uhr 30 kann in dem Zollstock 10 integriert sein, in einer entsprechenden Aussparung (nicht gezeigt) eingebettet sein und/oder mittels eines geeigneten Verfahrens (z.B. Kleben) am Zollstock 10 befestigt sein. Die Uhr 30 ist an der Oberseite 15 des Zollstocks 10 vorgesehen. Ein oder mehrere Leuchtelemente 18 können an den Längsseiten 20 des Gliedes 12 und/oder an der Stirnseite 22 des Gliedes 12 angeordnet sein.

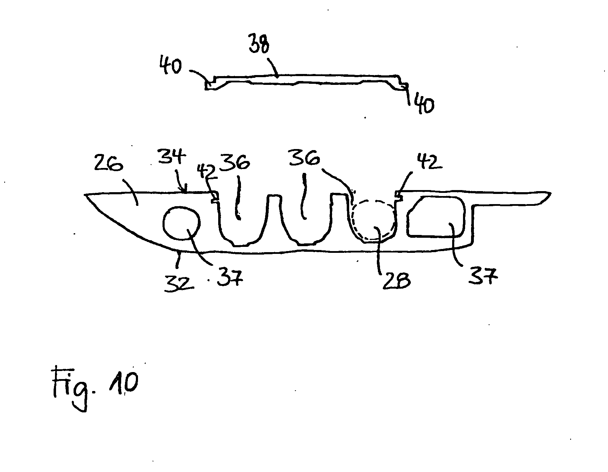

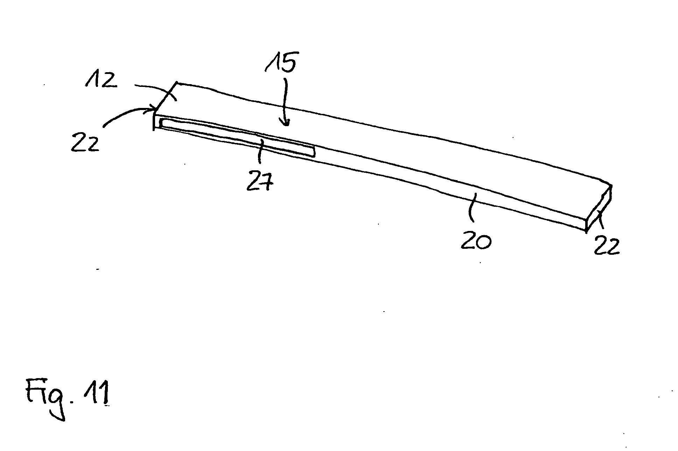

In Figur 10 ist ein Elektronikbauteil 26 gezeigt, das alternativ zu dem in Figur 8 gezeigten Elektronikbauteils am Zollstock 10 anbringbar ist. Das Kunststoff-Bauteil ist in eine Aussparung einsetzbar, die an der Längsseite 20 oder Stirnseite 22 des obersten Gliedes des Zollstocks 10 vorgesehen ist. Figur 11 zeigt das oberste Glied 12 eines Zollstocks 10 mit einer Aussparung 27 in der Längsseite 20.

Die Aussparung ist entweder nachträglich aus dem Glied des Zollstocks 10 ausgefräst, oder es kann bereits beim Herstellen des Zollstockgliedes, insbesondere Spritzen des Gliedes, eine solche Aussparung durch entsprechende Werkzeuge vorgesehen werden. Auch ist es denkbar, das Glied des Zollstocks 10 zweiteilig auszubilden, das Bauteil in das obere bzw. untere Teil des Gliedes einzulegen und anschließend das obere und das untere Teil miteinander entlang einer Verbindungsnaht zu verbinden, wobei sich die Verbindungsnaht entlang der Längsseiten 20 und Stirnseiten 22 erstreckt.

Das Bauteil 26 weist eine gekrümmte Kante 32 und eine gegenüberliegende, im wesentlichen gerade Kante 34 auf, wobei die gerade Kante 34, wenn das Elektronikbauteil 26 in die Aussparung im Zollstock 10 eingebracht ist, einen Teil der Längsseite des Zollstocks 10 bildet. Die gerade Kante 34 ist von drei Einbuchtungen 36 unterbrochen, wobei jede Einbuchtung 36 eine Batterie 28 aufnehmen kann. Figur 10 zeigt eine aufgenommene Batterie 28. Ferner hat das Bauteil zwei Hohlräume 37, die eine Schaltereinrichtung und/oder ein Leuchtelement aufnehmen können.

Es ist ein Steg 38 mit zwei Vorsprüngen 40 vorgesehen. Die Vorsprünge 40 des Stegs 38 können in entsprechende Einbuchtungen 42 des Bauteils ragen und dabei die Einbuchtungen 36 abdecken, so dass die Längsseite 20 des Zollstocks 10 im Wesentlichen eben ist.

Das Bauteil 26 wird insbesondere mittels Laserschweißen am Zollstock 10 festgelegt. Insbesondere erfolgt das Laserschweißen nicht von der Oberseite des Zollstocks, sondern von der Längsseite desselben. Um ein Eindringen der Laserstrahlen zu ermöglichen und verstärken, ist das Bauteil 26 insbesondere transparent ausgebildet Desweiteren können Reflexionsmittel vorgesehen sein, um den Laserstrahl wunschgemäß abzulenken. Beim Laserstrahlschweißen wird kein Zusatzwerkstoff, wie Draht usw., verwendet; vielmehr werden Kunststoffe verwendet, die eine Schmelze bilden, also Thermoplaste. Da das Bauteil transparent ist, strahlt der Laser nahezu ungehindert durch dieses hindurch. Aufgrund der Transparenz erhitzt sich das Bauteil selbst kaum. Der Zollstock hingegen absorbiert die Strahlung, beginnt zu schmelzen und gibt dabei die entstandene Wärme durch Wärmeleitung an das Bauteil weiter. Nach dem Festlegen des Bauteils in der Aussparung werden die Batterien 28 in die Einbuchtungen 36 eigebracht werden und die Einbuchtungen 36 vom Steg 38 verschlossen, so dass eine ebene Längsseite 20 gebildet ist.

Das Laserschweißen kann auch von der Oberseite des Zollstocks erfolgen, falls die Maßskala erst nachträglich auf das Zollstockglied aufgebracht wird.

Alternativ kann das Bauteil 26 auch mit Hilfe eines Klebemittels am Zollstock angebracht werden. Auch ist es denkbar, das Bauteil 26 mittels Ultraschallschweißen am Zollstock 10 zu befestigen.

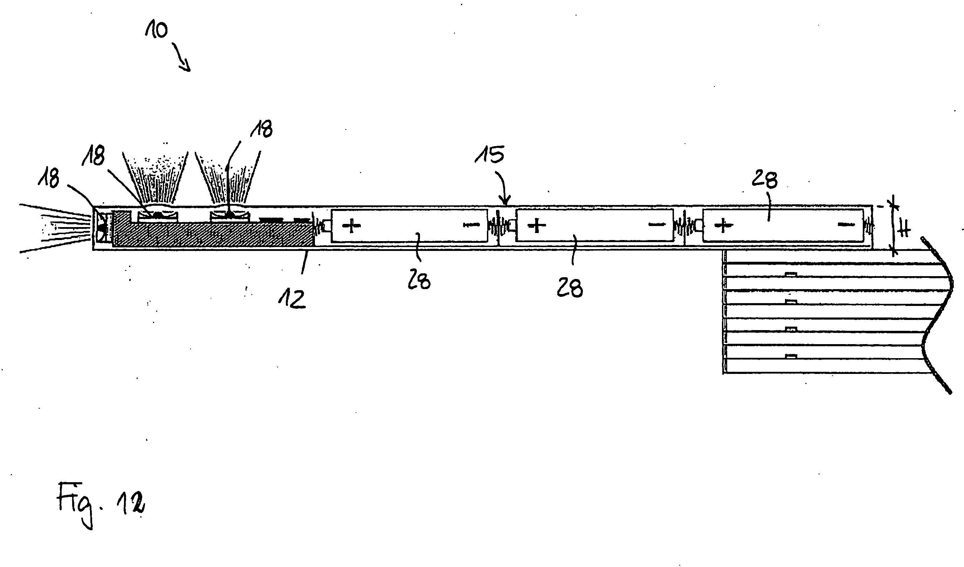

In Figur 12 ist ein Zollstock 10 gezeigt, dessen oberstes Glied 12 drei Batterien 28 der Größe AAA aufnimmt. Das oberste Glied 12 des Zollstocks 10 weist deshalb eine Höhe H auf, die sich von der Höhe der restlichen Glieder 12 unterscheidet. Die Batterien 28 werden entweder seitlich im obersten Glied eingesetzt. Genauso gut können die Batterien 28 von der Oberseite 15 des obersten Gliedes 12 eingesetzt werden.

## Patentansprüche

1. Zollstock zum Ablesen von Entfernungen, welcher als Gliederzollstock mit mehreren Glieder ausgebildet ist und an welchem mindestens ein Leuchtelement (18) vorgesehen ist,
**dadurch gekennzeichnet, dass** das wenigstens eine Leuchtelement (18) an einem Endglied (12) des Gliederzollstocks angeordnet ist, dass das Endglied (12) eine Stirnseite (22), eine eine Maßskala (14) aufweisende Oberseite (15) und eine Längsseite (20) aufweist, und dass die Leuchtdichte und die strahlende Fläche des Leuchtelements (18) so ausgebildet sind, dass es die Umgebung in der Nähe des Zollstocks, ausleuchtet, wobei ein Elektronikbauteil (26), welches das wenigstens eine Leuchtelement (18) und eine Schaltereinrichtung (24) aufweist, in einer Aussparung (27) in der Längsseite (20) oder der Stimseit (22) des Endgliedes (12) angeordnet ist.

2. Zollstock nach Anspruch 1, **dadurch gekennzeichnet, dass** das mindestens eine Leuchtelement (18) in dem Zollstock (10) integriert ist

3. Zollstock nach Anspruch 1 oder 2, **dadurch gekennzeichnet, dass** das mindestens eine Leuchtelement (18) batterie- oder solarbetrieben ist.

4. Zollstock nach einem der vorhergehenden Ansprüche, **dadurch gekennzeichnet, dass** eine Schaltervorrichtung (24) vorgesehen ist, mittels der das mindestens eine Leuchtelement (18) ein- und/oder ausschaltbar ist

5. Zollstock nach Anspruch 4, **dadurch gekennzeichnet, dass** die Schaltervorrichtung (24) ein Schiebeschalter, ein Tastschalter, ein elektrisch gesteuerter Schalter oder ein Druckschalter ist.

6. Zollstock nach Anspruch 4 oder 5, **dadurch gekennzeichnet, dass** die Schaltervorrichtung (24) eine Stellung einnehmen kann, die ein Blinken des Leuchtelementes (18) bewirkt.

7. Zollstock nach einem der Ansprüche 1 bis 4, **dadurch gekennzeichnet, dass** ein Magnetschalter vorgesehen ist und der Zollstock (10) so ausgebildet ist, dass das mindestens eine Leuchtelement (14) beim Aufklappen ein- bzw. ausgeschaltet wird.

8. Zollstock nach Anspruch 1, **dadurch gekennzeichnet, dass** die Glieder (12) mittels Verbindungselemente lösbar miteinander verbunden sind.

9. Zollstock nach Anspruch 1, **dadurch gekennzeichnet, dass** mehrere Leuchtelemente (18) gleichmäßig über das Glied (12) verteilt angeordnet sind.

10. Zollstock nach einem der vorhergehenden Ansprüche, **dadurch gekennzeichnet, dass** das mindestens eine Leuchtelement (18) in das Material eines Gliedes (12) eingebettet ist.

11. Zollstock nach einem der vorhergehenden Ansprüche, **dadurch gekennzeichnet, dass** das Material des Gliedes (12) zumindest an der Stelle des mindestens einen Leuchtelementes (18) oder vollständig für das vom wenigstens einen Leuchtelement (18) ausgestrahlte Licht durchlässig ist.

## Claims

1. Ruler for reading distances designed as a sectioned ruler with several sections and upon which at least one luminary element (18) is provided for,
**characterized by** the fact that at least one luminary element (18) is attached at an end section (12) of the sectioned ruler, that the end section (12) has a top side (22), a measurement scale (14) on the upper side (15) and a longitudinal side (20), and that the luminary elements and the radiating surface of the luminary elements (18) are designed so that it illuminates the area near the ruler, whereby one electronic component (26) which has at least one luminary element (18) and one switch device (24) is arranged in a cut-out (27) in the longitudinal side (20) or the top side (22) of the end section (12).

2. Ruler according to claim 1, **characterized in that** at least one luminary element (18) is integrated into the ruler (10).

3. Ruler according to claim 1 or 2, **characterized in that** the minimum of one luminary element (18) is powered by battery or solar cell.

4. Ruler according to one of the previous claims, **characterized in that** a switch device (24) is provided for by means of which the minimum of one luminary element (18) can be turned on or off.

5. Ruler according to claim 4, **characterized in that** the switch device (24) is a slide switch, a push button, an electrically controlled switch or a press switch.

6. Ruler according to claim 4 or 5, **characterized in that** the switch device (24) can be posited to cause a blinking of the luminary element (18).

7. Ruler according to claims 1 to 4, **characterized in that** a magnetic switch is provided for and the ruler (10) is designed so that the minimum of one luminary element (14) is turned on or off when opened.

8. Ruler according to claim 1, **characterized in that** the sections (12) are detachably connected with each other with connecting elements.

9. Ruler according to claim 1, **characterized in that** several luminary elements (18) are arranged in uniform distribution over the section (12).

10. Ruler according to one of the previous claims, **characterized in that** the minimum of one luminary element (18) is embedded in the material of the section (12).

11. Ruler according to to one of the previous claims, **characterized in that** the material of the section (12) is transparent to light at least at the position of the minimum of one luminary element (18) or completely for the light radiated by the minimum of one luminary element (18).

## Revendications

1. Mètre pliant destiné à lire les distances, constitué de plusieurs articulations, et muni d'au moins un élément lumineux (18),
**caractérisé en ce que** cet élément lumineux (18), qui est au minimum au nombre de un, est situé sur une des articulations finales (12) du mètre pliant, que l'articulation finale (12) présente une face frontale (22), une face supérieure (15) munie d'une échelle de mesure (14) et une face longitudinale (20), et que la luminance et la surface de rayonnement de l'élément lumineux (18) sont conçues de sorte à éclairer l'espace ambiant du mètre pliant; un composant électronique (26) équipant l'élément lumineux (18) qui est au minimum au nombre de un et un interrupteur (24) est installé dans un orifice (27) situé sur la face longitudinale (20) ou la face frontale (22) de l'articulation finale (12).

2. Le mètre pliant, selon la revendication 1, est **caractérisé en ce qu'**au moins un élément lumineux (18) est intégré au mètre pliant (10).

3. Le mètre pliant, selon les revendications 1 ou 2, est **caractérisé en ce que** l'élément lumineux (18), qui est au minimum au nombre de un, fonctionne par pile ou par énergie solaire.

4. Le mètre pliant, selon les revendications précédentes, est **caractérisé en ce qu'**il est équipé d'un interrupteur (24) au moyen duquel l'élément lumineux (18), qui est au minimum au nombre de un, peut être allumé et/ou éteint.

5. Le mètre pliant, selon la revendication 4, est **caractérisé en ce que** l'interrupteur (24) est un commutateur, un bouton-poussoir, un interrupteur commandé électriquement ou un commutateur à pression.

6. Le mètre pliant, selon la revendication 4 ou 5, est **caractérisé en ce que** l'interrupteur (24) occupe une position telle qu'il peut permettre le clignotement de l'élément lumineux (18).

7. Le mètre pliant, selon la revendication 1 à 4, est **caractérisé en ce qu'**il est muni d'un interrupteur magnétique et que le mètre pliant (10) est conçu de sorte que l'élément lumineux (14), qui est au minimum au nombre de un, est allumé ou éteint quand on déplie le mètre.

8. Le mètre pliant, selon la revendication 1, est **caractérisé en ce que** ses articulations (12) sont reliées entre elles de manière amovible par des éléments de liaison.

9. Le mètre pliant, selon la revendication 1, est **caractérisé en ce que** plusieurs éléments lumineux (18) sont répartis de manière régulière sur l'articulation (12).

10. Le mètre pliant, selon une des revendications précédentes, est **caractérisé en ce que** l'élément lumineux (18), qui est au minimum au nombre de un, est intégré dans le matériau qui constitue une des articulations (12).

11. Le mètre pliant, selon une des revendications précédentes, est **caractérisé en ce que** le matériau qui constitue l'articulation (12) est transparent au moins à l'endroit de l'élément lumineux (18) qui est au minimum au nombre de un, ou entièrement pour la lumière émise par l'élément lumineux (18) qui est au minimum au nombre de un.
